# EUROPEAN PATENT APPLICATION

(11) **EP 2 249 462 A1**
(43) Date of publication of application: **10.11.2010**
(21) Application number: 10159726.8
(22) Date of filing: 13.04.2010
(51) Int. Cl.: H02K 7/102, E06B 9/72

(54) **Improved drive operator for shutters**

(30) Priority: 14.04.2009 IT PN20090026
(71) Applicant: NICE S.P.A., 31046 Oderzo (Treviso) (IT)
(72) Inventor: La Fortezza, Francesco, 31046, Oderzo (Treviso) (IT)
(74) Representative: Feltrinelli, Secondo Andrea

(57) **Abstract**

A drive operator is described for shutters comprising a friction brake (80) to brake a drive shaft (20). The brake is equipped with high friction coefficient means (40, 60) which can be engaged by a pusher (20) which can move along the shaft axis on command. The high friction coefficient means comprise at least two distinct elements which can be removably associated with one another, a first element (40) being made from high friction coefficient material and a second element (60) being for anchoring inside the brake so as to prevent its rotation. This makes it possible to avoid the process of over-injection, replace the high friction coefficient element when it is worn out and to avoid using toxic glues.

## Description

The invention refers to an improved drive operator for shutters.

Fig. 1, taken from EP 728 906, shows a known drive operator for shutters. A first element 13a is mounted on a transmission shaft 9, said first element 13a cooperating with a second element 13b longitudinally movable with respect to the shaft 9. The two elements 13a, 13b rotate and can interact with a brake ring 17 placed between them. An elastic element 12 pushes the second element 13b against the first element 13a. When the elements 13a, 13b come closer they interact with the brake ring 17, generating a braking action on the shaft 9. Between the brake ring 17 and the elements 13a, 13b two brake pads 15, 16 made from high friction coefficient material (from here on also called HFC material) are arranged.

Italian utility model no. 227 599 describes another tubular gear motor. It comprises a brake formed by a plate 18 housed on a bushing 12 rotatable with a shaft 7. The plate 18 is longitudinally movable with respect to the shaft 7, and interacts with a fixed contact-plate 20 thanks to the push action of a spring 15. A friction disc 19 is glued on the plate 18 to increase the friction with the fixed plate 20.

Patent US 2 536 491 describes a brake for an electric motor having a first brake element 18, fixed to a shaft 11, which interacts with a second brake element 20 fixed to the shell of the motor. The longitudinal movement of the second brake element 20, pushed by a spring 22, determines the brake action of its HFC cover 21 against the first brake element 18.

Finally, the patent FR 2 879 369 describes a tubular gear motor with a single- or double- effect brake. Differently from the aforementioned documents, the brake is made up of a first element 51 only movable longitudinally, without rotating, with respect to a shaft 44, and a second element 52 fixed to the shaft 44 itself. The action of a spring 9 pushes the first element 51 against the second element 52. On the element 51 there is an HFC gasket 53.
Generically, the gasket 53, the cover 21 or the pads 15, 16 of the previous examples made from HFC material are made as a single piece with the relative load-bearing element by means of over-injection. In other cases, like the brake-disc 19 on the bushing 12, glues or adhesives are used.

In particular, the invention refers to the means with HFC material in the brake.

Their current embodiment, as we have said, mostly envisages that HFC material be over-injected, or glued onto an inner ring, which finally ends up being covered by it. There are thus some drawbacks, including
- high production cost, due to the double injection and especially the preliminary manufacture of the relative moulds;
- the applicability of the double injection just for gear motors sold in large quantities, since products produced in limited numbers do not offset its cost;
- the waste of having to throw away the inner ring when the outer cladding of HFC material is worn out;
- problems of disposal of the inner ring partially covered in worn out HFC material;
- the greater cost of the new replacement ring;
- the toxicity of the glues used for fixing;
- adopting the over-injection or double injection technique limits the designer in the choice of materials used (they must be compatible one another), and of the shapes of the single pieces (it mustn't be forgotten that the inner operating temperature of a tubular gear motor is of about 120°C, and that the operating temperature of the components affects the choice of the material used).

The main object of the invention is to make HFC means to be integrated into the brake of a drive operator of the described type which minimise the aforementioned problems.

Such an object is reached with a drive operator as defined in claim 1, whereby the drive operator comprises a friction brake to brake a drive shaft, the brake being equipped with high friction coefficient means which are able to be engaged by a movable pusher along the shaft axis on command, and said means comprise at least two distinct elements removably associated one another, a first element being made up of a high friction coefficient material and a second element being for anchoring inside the brake to prevent its rotation.

This makes it possible to avoid the over-injection process, to replace the high friction coefficient element when it is worn out and to avoid the use of toxic glues.

Preferred and advantageous embodiments are further defined in the dependent claims.

In any case, the advantages and the characteristics of the invention shall become clearer from the following description of an example embodiment, with the attached drawing, in which:

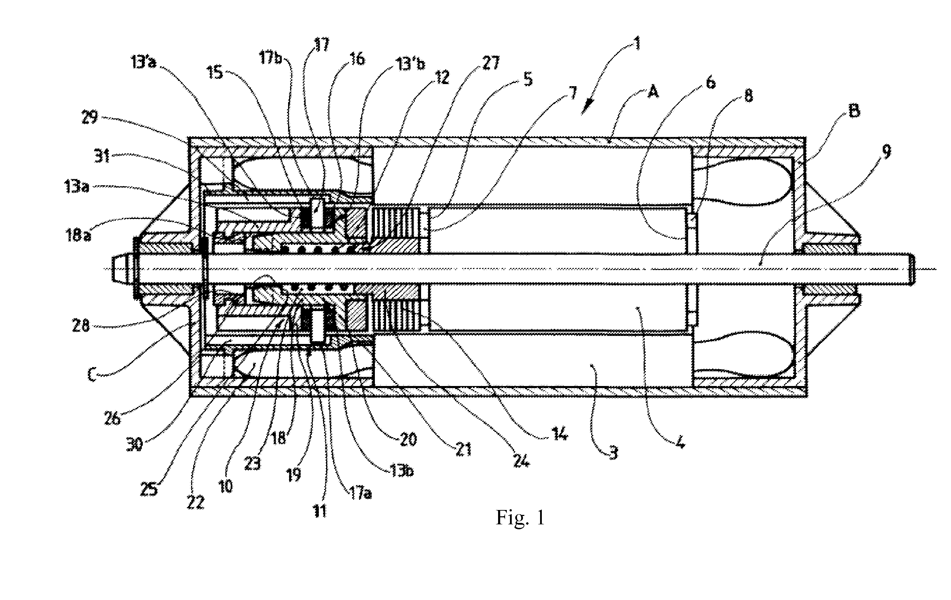

fig. 1 shows a known drive operator;
fig. 2 shows a side section view of a known drive operator in the configuration with the brake inserted;
fig. 3 shows a side section view of the drive operator in fig. 2 in the configuration with the brake released;
fig. 4 shows a partially exploded view of a drive operator according to the invention;
fig. 5 shows an individual component present in fig. 4;
fig. 6 shows a section view according to the plane VI-VI of fig. 5;
fig. 7 shows a three dimensional view of the component of fig. 5;
fig. 8 shows an individual component present in fig. 4;
fig. 9 shows a side view of the component of fig. 8;
fig. 10 shows a three dimensional view of the component of fig. 8.
fig. 11 shows a plan view of the components of figures 7 and 10 coupled together;
fig. 12 shows a three dimensional view of the components of figures 7 and 10 coupled together.

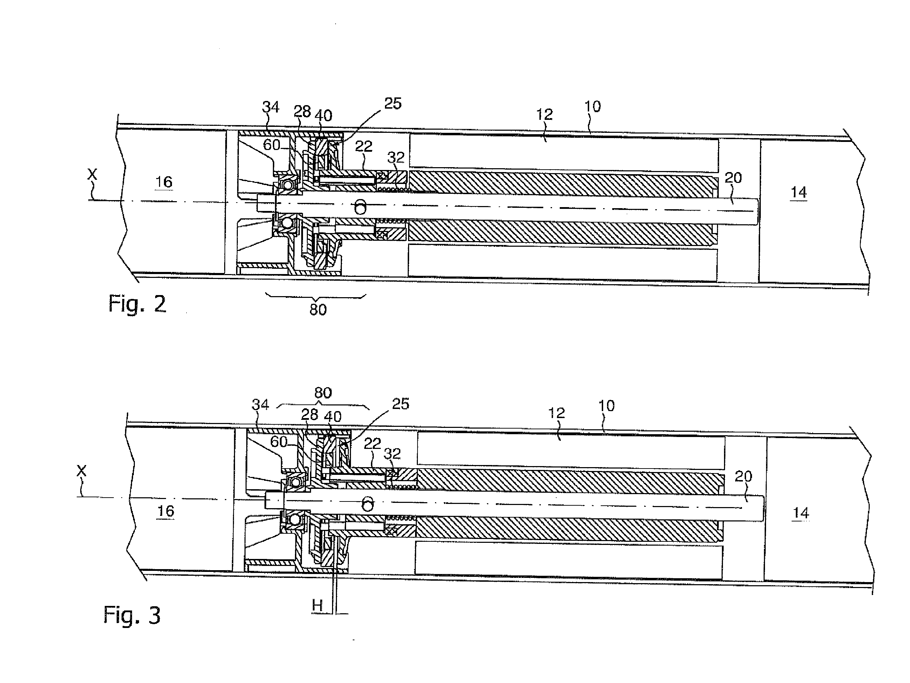

A drive operator according to the invention has the inner structure of figures 2 and 3.
It is made up of a tubular casing 10 inside which there are, amongst other things, suitably mechanically connected to one another, an electric motor 12, an end-stop device 14, an output mechanical gearbox 16 and a friction brake 80 to brake a shaft 20 rotating around an axis X.
The brake 80 is made up of:
- a support 22 axially movable along the axis X which acts as a pusher,
- braking means 25, comprising a ring 40 made from HFC material and a support 60, axially movable with respect to the axis X but blocked from rotating by the fixed cage 34; and
- a thrust-bearing disc 28 against which a surface of the HFC material abuts.

A spring 32 pushes the support 22 against the disc 28. In fig. 2 the spring 32 acts without opposition and therefore the brake for the shaft 20 is inserted, and the brake action is given by the contact between the support 22, the disc 28 and the HFC material means , which stay compressed between the two preventing their relative rotational movement.
By actuating the motor 12, a secondary winding is excited and the support 22 is retracted against the spring 32, separating (see in fig. 3 the detachment H) the support 22 from the braking means 25 and from the disc 28. Now the shaft 20 is able to rotate freely without brake.

A fixed cage 34 contains all of the brake 80, and is used to avoid the rotation of the braking means 25 whereas the support 22 and the disc 28 rotate integral with the shaft 20.

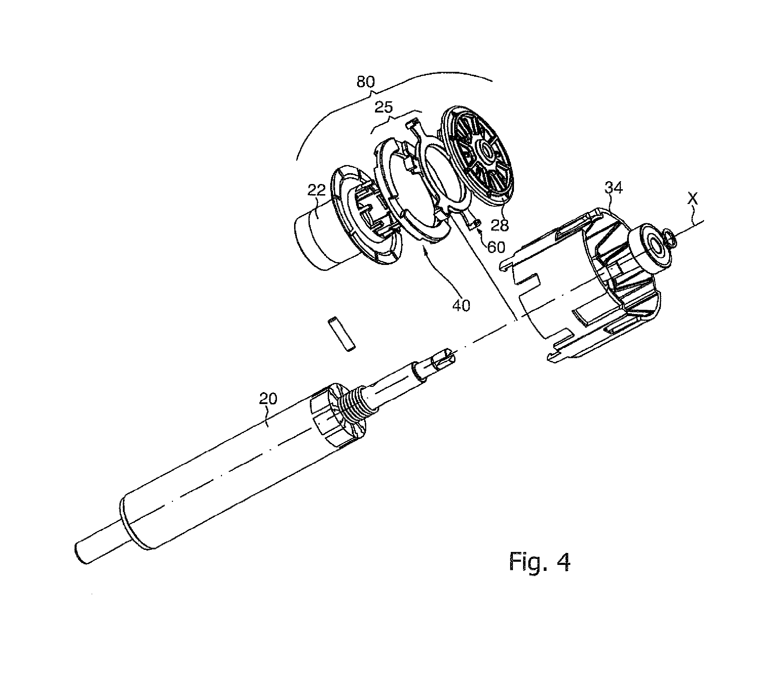

Now refer to fig. 4, showing how the braking means 25 of the invention are made.
They are placed between the support 22 and the disc 28 and comprise a ring 40, made from HFC material, and a support 60 for the ring 40.
The ring 40 and the support 60 are not connected to the shaft 20 but rather to the cage 34.

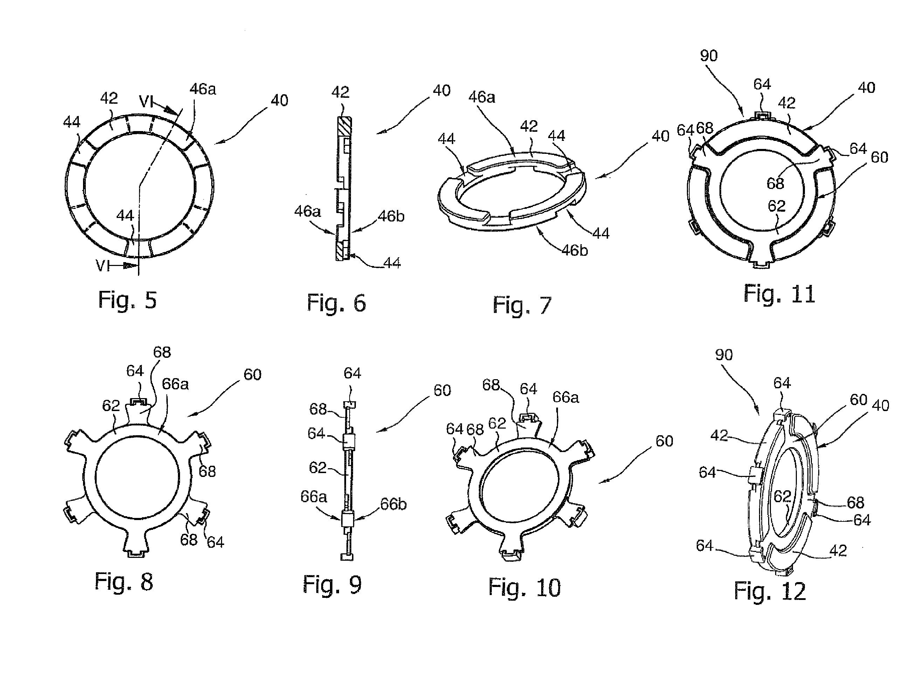

The ring 40 is formed by a circular crown 42 on the opposite surfaces 46a, 46b of which three concavities or seats 44 (three for each surface) are preferably envisaged. Preferably the concavities 44 are placed at 120° with respect to one another, and radially extend for the entire width of the crown 42. The concavities 44 have a depth of about half the thickness of the crown 42. They can vary in number, in their arrangement, and also in shape. In the example of fig. 5, 6 and 7 they have section of circular sector section, there are totally six of them, (arranged as the vertices of an equilateral triangle three by three on the surfaces 46a, 46b) and have polar symmetry with respect to the centre of the crown 42. Travelling along the crown 42 itself, one runs up against a concavity on the surface 46a, and then one on the surface 46b, and so forth according to an alternate and regular arrangement.

The support 60 has a substantially radial shape (it looks like a stylised sun), see figures 8-10. It is formed by a circular crown 62 on the opposite surfaces 66a, 66b of which three radial segments 68 are present (three for each surface), positioned with the same pattern of the concavities 44. Preferably they are placed at 120° with respect to one another, they extend from the outermost edge of such surfaces and have a smaller thickness than the depth of the concavities 44. Also the segments 68 can vary in number, in arrangement, and shape too. In the figures they are preferably arranged as the vertices of an equilateral triangle, three by three on the surfaces 66a, 66b, fully corresponding with the concavities 44. For the segments 68, the same as for the concavities 44 applies:
they have polar symmetry with respect to the centre of the crown 62, and travelling the crown 62 itself one runs up against a segment 64 on the surface 66a, then one on the surface 66b, and so forth according to an alternate and regular arrangement that follows that of the concavities 44.
   It should be noted that the segments 68 have a thickness equal to about half of that of the crown 62, in any case smaller than the depth of the concavities 44, and at the end of each segment 68 there is a tooth 64 perpendicular to it, with a height about the same as the thickness of the crown 62 and is suitable for interacting with proper seats (not shown) made on the inner side of the cage 34. The latter blocks the support 60, i.e. does not allow it to rotate, because it is blocked inside the tubular casing 10. The distance between a tooth 64 and the outer edge of the crown 62 (that substantially coincides with the length of the segments 68) is practically equal to the width of the crown 42 in the ring 40. The thickness of the segments 68 is smaller than the depth of the concavities 44 in the ring 40, whereas the plan of the segments 68 is complementary to that of the concavities 44, so as to be received therein without noticeable clearance.

The ring 40 and the support 60 are configured to be coupled on and with one another ("lacing together"), see figs. 11 and 12, with the assembly indicated with reference numeral 90. The ring 40 is made from a flexible HFC material, so as to be adapted above the support 60, which is more rigid. After the reciprocal assembly, each segment 68 is arranged into a corresponding concavity 44. Since the segments 68 and the concavities 44 alternate on the major surfaces of the two elements, the support 60 blocks a ring 40 on it and they can not accidentally detach. The teeth 64 abut against and embrace the crown 42, ensuring further stability of the assembly 90.

It should be noted that thanks to the relative dimensions between the support 60 and the ring 40, the crown 42 projects from the support 60 with both surfaces 46a, 46b. Therefore, the assembly 90 has the HFC material on two opposite faces, thus improving the brake action between the support 22 and the disc 28.

## Claims

1. Drive operator for blinds comprising a friction brake (80) to brake a motor shaft (20), the brake being equipped with high friction-coefficient means (40, 60) engageable by a controllably movable pusher (22) along the axis of the shaft,
**characterized in that** said means comprise at least two distinct elements removably associated with each other, a first element (40) being made of a high friction-coefficient material and a second element (60) being anchoring inside the brake to prevent rotation thereof.

2. Drive operator according to claim 1, in which said elements (40, 60) are associated to one another so as to compenetrate with each other.

3. Drive operator according to claim 1 or 2, in which at least one (40) of the two elements is made of a flexible material, so that it can be adapted on the other element through plastic deformation.

4. Drive operator according to one of the preceding claims, in which at least one (40) of the two elements is coupled to the other (60) so as to embrace it on two opposite sides.

5. Drive operator according to one of the preceding claims, further comprising fixing elements, distinct from said two elements, which are adapted to removably fix with each other said two elements.

6. Drive operator according to claim 4 or 5, in which the first element exhibits one or more concavities (44) on at least one face, while the second element exhibits one or more radial segments (64), substantially complementary thereto, which are adapted to be placed in such concavities.

7. Drive operator according to claim 6, in which the said concavities are present on both the major opposite sides (46a, 46b) of the first element, and are distributed with polar symmetry with respect to its center, corresponding in the second element a similar arrangement of radial segments.

8. Drive operator according to claim 7, in which said concavities are distributed on the two major sides by alternating one on a face and the next one on the opposite face, corresponding in the second element a similar arrangement of radial segments so that they extend from the edges of the two major faces alternating themselves one on a side and the next one on the opposite side.

9. Drive operator according to any of claims 6 to 8, wherein the depth of the concavities (44) is greater than the thickness of said segments.

10. Drive operator according to any of the preceding claims, in which at least one of said elements is in turn composed of several pieces associated with each other.
